# FASCICULE DE BREVET EUROPEEN

(11) **EP 0 864 768 B1**
(45) Date de publication et mention de la délivrance du brevet: **09.07.2003**
(21) Numéro de dépôt: 98870037.3
(22) Date de dépôt: 24.02.1998
(51) Int. Cl.: F16B 39/10

(54) **Ecrou à verrouillage positif et micrométrique automatique**
Automatische und mikrometrische, selbsthemmende Mutter
Automatic and micrometric positive locking nut

(30) Priorité: 26.02.1997 BE 9700175
(43) Date de publication de la demande: 16.09.1998
(73) Titulaire: EUROPEAN LOCKING DEVICES S.A., B-4960 Malmedy (BE)
(72) Inventeur: Dessouroux, Alexis, 4960 Malmedy (BE)
(74) Mandataire: Van Malderen, Michel

(56) Documents cités:
- WO-A-93/05307
- FR-A- 2 358 581

## Description

### Objet de l'invention

La publication WO 93/05307 du 2 septembre 1992, décrit un écrou à verrouillage positif automatique destiné à être vissé sur un arbre présentant un filetage cannelé, ledit écrou comprenant un élément frein, présentant des cannelures sur le diamètre interne, destiné à immobiliser l'écrou en rotation sur l'arbre, cet élément frein étant enfermé dans un chambrage de l'écrou et étant mobile axialement dans ledit chambrage entre une première position de verrouillage et une seconde position de déverrouillage, dans lequel l'élément frein est constitué de plusieurs segments de bague cannelée, les différents segments étant solidarisés par un anneau circulaire élastique.

Cette publication décrit, dans une première forme d'exécution, que le désengrènement des cannelures des segments de l'élément frein avec les cannelures de l'arbre est obtenu par un mouvement radial et que dans une deuxième forme d'exécution il peut également être obtenu par un mouvement rotatoire des segments de l'élément frein autour d'axes géométriques traversant perpendiculairement et en son centre la section droite de l'anneau élastique qui permet la solidarisation des différents segments.

L'objet de la présente invention porte principalement sur une amélioration de la seconde forme d'exécution de la dite publication.

### Etat de l'art.

On connaît déjà de nombreux types d'écrous à verrouillage positif dont l'exemple le plus classique est l'écrou crénelé associé à une goupille disposée à travers un trou de l'arbre sur lequel est vissé l'écrou et s'étendant à la fois dans ce trou et dans deux créneaux de l'écrou.

Ce type particulier d'écrou présente des inconvénients inhérents à sa structure, en particulier une résistance insuffisante, un mauvais comportement aux vibrations et une efficacité limitée.

Un perfectionnement a été apporté en introduisant un élément frein dans l'écrou à verrouillage positif. Ce type d'écrou est décrit en particulier dans les documents FR-A-2 358 581 et US-A-4 328 720.

Le document EP-0 102 898 décrit un exemple particulier de dispositif d'écrou à verrouillage positif automatique destiné à être immobilisé en rotation sur l'arbre et comportant un élément frein.

Dans ce document, l'élément frein se présente sous la forme d'une bague filetée prisonnière dans un chambrage de l'écrou avec lequel elle est solidaire en rotation. La bague comporte des cannelures le long du filetage intérieur qui sont destinées à coopérer avec les cannelures complémentaires de l'arbre lorsque les filetages de la bague et de l'écrou sont en phase.

Néanmoins, l'efficacité d'un tel écrou risque d'être compromise sous l'effet des vibrations.

Le document FR-A-2 321 625 mentionne quant à lui un dispositif de freinage d'écrou composé principalement d'une bague comportant des cannelures internes et d'un anneau torique ouvert logé dans une gorge circulaire située sur la partie externe de cette dite bague. On notera d'une part que cette bague est monobloc, et, d'autre part que cet anneau joue dans ce cas le rôle d'un circlips de retenue dans ledit écrou à freiner.

Le document GB-A-547 624 mentionne la possibilité d'un freinage obtenu par la pression des filets de l'écrou sur ceux de l'arbre, pression obtenue par un anneau ressort, torique et ouvert comprimant radialement une jupe arrière et solidaire de l'écrou rendue partiellement malléable par des fraisures radiales. On notera également que la segmentation artificielle obtenue par des fraisures dans l'écrou fait intégralement partie de cet écrou. D'autre part, le freinage obtenu est un freinage limité et uniquement basé sur les capacités de friction du filetage de l'écrou par rapport au filetage de la vis.

Le document US-830,787 décrit un écrou pourvu en sa partie arrière d'une excroissance, de profil extérieur carré, destinée à pouvoir le manipuler à l'aide d'une clé particulière fermée pourvue elle-même, d'une découpe intérieure d'un profil carré de même dimension que celui de l'écrou. Une autre particularité de cet écrou est, qu'il comporte dans le milieu d'un seul des plats de son profil carré, un linguet mobile sur un axe de rotation incorporé à l'écrou. Ce linguet sollicité par la pression d'un ressort cylindrique de compression est destiné à venir se loger dans la seule rainure pratiquée sur le filetage de la vis. La clé particulière présente en son entrée un usinage particulier destiné, lors de l'engagement de celle-ci sur un tel écrou, à provoquer le basculement du linguet sur son axe de rotation et permettre ainsi de le dégager de la rainure de la vis afin de pouvoir ainsi le déplacer sur la vis.

On s'aperçoit très vite des inconvénients d'un tel écrou qui, d'une part, nécessite un outillage particulier bien spécifique et d'autre part, n'offre une possibilité de verrouillage que tous les 360°... soit à chaque tour d'écrou.

Le document US-1,414,761 présente, quant à lui, un écrou similaire au précédent qui ne comporte toujours qu'un seul linguet d'anti-rotation mais qui se différencie du précédent:
- par sa forme extérieure hexagonale;
- par la nécessité d'utiliser une clé à molette qui provoque, lors de sa mise en place, le basculement du linguet d'anti-rotation;
- par la possibilité d'usiner sur la vis un plus grand nombre de rainures visant à augmenter le nombre de positions de verrouillage sur les 360° d'un tour d'écrou.

On s'aperçoit de suite que cet écrou ne comportant et d'ailleurs ne pouvant toujours comporter qu'un seul linguet d'anti-rotation, de par la conception de l'outillage de pose préconisé en l'occurrence, une clé à molette, le nombre de positions de verrouillage sur un tour d'écrou sera toujours et exclusivement limité au nombre de rainures sur la vis; de plus, l'obligation de devoir utiliser une clé à molette restreint l'application d'un tel type d'écrou aux seuls endroits où un large accès latéral à l'écrou est permis, ce qui n'est malheureusement pas le cas de la majorité des applications mécaniques usuelles.

Enfin, le document EP-0 608 246 B1 décrit un écrou à verrouillage positif automatique destiné à être vissé sur un arbre présentant un filetage cannelé, ledit écrou comprenant un élément frein présentant des cannelures sur son diamètre intérieur et qui est destiné à immobiliser l'écrou en rotation sur l'arbre, cet élément frein étant enfermé dans un chambrage de l'écrou et étant mobile axialement dans ledit chambrage entre une première position de verrouillage et une seconde position de déverrouillage caractérisé en ce que l'élément frein est constitué par plusieurs segments de bague cannelée, les différents segments étant solidarisés par un anneau circulaire élastique. Ladite position de verrouillage correspondant à la position pour laquelle les cannelures de chaque segment de l'élément frein coopèrent parfaitement avec les cannelures complémentaires disposées sur le filetage de l'arbre, et ladite position de déverrouillage correspondant à la position où les cannelures de chaque segment de l'élément frein se désolidarisent totalement des cannelures disposées sur le filetage de l'arbre. Ledit brevet signale, dans une première forme d'exécution, que le désengrènement des cannelures de l'élément frein avec les cannelures de l'arbre est obtenu par un mouvement radial des segments de l'élément frein et que dans une deuxième forme d'exécution il peut également être obtenu par un mouvement rotatoire des segments de l'élément frein autour d'axes géométriques traversant perpendiculairement et en son centre la section droite de l'anneau élastique qui permet la solidarisation des différents segments. Bien que cette seconde forme d'exécution soit parfaitement fonctionnelle, il n'en reste pas moins vrai dans la pratique que la rotation de chacun des segments dans l'espace provoque un déploiement de leur ensemble d'une envergure considérable. De plus, ce déploiement devant s'effectuer à l'intérieur d'un chambrage pratiqué dans la partie arrière de l'écrou proprement dit, les dimensions extérieures de l'écrou nécessitent d'être déterminées en conséquence et l'on peut alors obtenir un écrou anormalement surdimensionné comparativement à un écrou standard du commerce de même dimension de filetage, avec en plus comme corollaire le préjudice d'un poids d'ensemble qui peut être beaucoup plus important.

### Buts de l'invention

La présente invention vise non seulement à fournir un écrou perfectionné qui puisse se verrouiller de manière sûre et efficace sur un arbre, ne présentant pas les inconvénients des écrous de l'art antérieur, le verrouillage étant du type positif et micrométrique automatique mais aussi, à optimiser les performances de la seconde forme d'exécution de l'invention décrite dans le document WO 93/05307.

En particulier, la présente invention vise également à fournir un écrou perfectionné destiné à des applications présentant des niveaux de vibrations élevés et surtout des vitesses de rotation pouvant être très élevées. L'écrou selon la présente invention aura même tendance à amortir les vibrations auxquelles il est soumis et à se verrouiller d'autant plus fort que la vitesse augmente, étant donné que les segments freins, par une adéquate répartition de leur masse, sont en déséquilibre par rapport à leur axe de rotation, de manière à créer, dans le cas d'applications tournantes, par le phénomène de la force centrifuge, une force radiale, agissant sur chaque segment dans le sens du verrouillage et, qui sera d'autant plus importante que la vitesse de rotation sera grande.

### Principaux éléments caractéristiques de la présente invention

L'invention comporte les caractéristiques apparaissant dans la revendication 1.

D'autres caractéristiques sont décrites dans les revendications dépendantes.

Il est considéré que le phénomène de déploiement de l'ensemble des segments d'envergure considérable tel que décrit dans la publication WO 93/05307 peut aisément être contrarié moyennant l'application des deux clauses suivantes, à savoir: d'une part réduire sur chacun des segments le nombre de dents à sa plus simple expression, en particulier à une seule dent, tout en réduisant simultanément l'angle de l'arc de segment dans la même proportion et, d'autre part réaliser la rotation de chacun des segments non plus autour d'axes virtuels, mais bien autour d'axes réels tels que des pivots solidarisés à l'écrou et traversant librement, par un trou pratiqué, chacun leur propre segment ou encore autour d'arrêtes formées par la jonction de deux surfaces, tel le fléau d'une balance sur son couteau.

Les segments pouvant alors chacun et indépendamment basculer autour de ces axes réels sont de plus, pourvus d'une ouverture dans laquelle prend place un anneau circulaire élastique ou ressort torique fermé, qui permet de solliciter radialement en permanence les différents segments freins en pressant fermement leur dent dans l'un des creux correspondants des cannelures de l'arbre. Cet anneau circulaire élastique ou ressort torique fermé est précontraint dans une rainure circulaire située dans une zone tronconique de la partie arrière et extérieure de l'écrou et épouse simultanément, au passage de chacune des rainures radiales pratiquées dans l'écrou, l'ouverture usinée sur chacun des segments freins.

De plus, les pattes des segments freins, réduites à l'épaisseur d'une dent, dépassent légèrement du profil extérieur hexagonal ou autre de l'écrou et de préférence, dans le cas présent, aux sommets de l'hexagone.

Il y a lieu de souligner que, le profil extérieur de l'écrou ne se limite pas à la forme hexagonale et peut être de toute autre forme, est de similitude parfaite de son profil extérieur avec le profil intérieur, obligatoirement fermé, de l'outil d'installation.

Il en résulte que l'engagement d'un tel outil sur l'écrou, provoquera inévitablement à son passage un accrochage avec chacune des pattes de segment dépassant des sommets du profil hexagonal ou autre de l'écrou, ce qui aura pour résultat le basculement de chacun des segments autour de leur axe propre. Cela aura pour conséquences, d'une part l'effacement de chacune des pattes à l'intérieur du profil extérieur hexagonal ou autre de l'écrou laissant ainsi l'outil s'engager plus ou moins librement sur l'écrou du fait de la réaction du ressort torique et, d'autre part la montée radiale de la dent de sorte que l'écrou puisse sans encombre être engagé sur le filetage d'un arbre cannelé.

Le phénomène cinématique inverse consistant à désengager l'outil de l'écrou, celui-ci une fois installé sur l'arbre, libèrera chacun des segments de la contrainte qui leur était appliquée par l'outil et leur laissera la liberté de pivoter autour de chacun de leur axe propre sous l'effet de l'effort radial du ressort torique fermé forçant chacun des segments à engager sa dent dans le creux lui faisant face sur les cannelures de l'arbre.

Bien que les flancs de l'unique dent sur chacun des segments puissent être de forme inclinée, nous préférerons, en vue d'obtenir un freinage franc et positif, des flancs droits qui viendront alors parfaitement épouser les creux de même forme des cannelures de l'arbre.

Une seconde forme d'exécution préférée de la présente invention consistant à envisager les cannelures de l'arbre à l'intérieur d'un alésage situé dans celui-ci sera également décrite.

Sera également décrite une troisième forme d'exécution préférée de la présente invention consistant à, d'une part supprimer la nécessité des pivots de rotation traversant chaque segment frein en les remplaçant par des arrêtes fixes, formées par l'intersection de deux surfaces, autour desquelles pivoteront les segments freins et, d'autre part obtenir un écrou qui, quelle que soit sa position angulaire sur la vis, procure à l'utilisateur l'assurance d'être toujours verrouillé.

### Brève description des figures

La présente invention sera mieux comprise à l'aide de la description qui suit donnée à titre d'illustration et faite au moyens des planches de figures annexées, dans lesquelles:
- la figure 1 représente une vue en élévation latérale par l'avant de l'arbre selon la figure 2;
- la figure 2 représente une vue en élévation latérale de l'arbre, en demi-coupe demi-vue selon la ligne I-I de la figure 1;
- la figure 3 représente une vue en élévation latérale par l'avant de l'écrou selon la première forme d'exécution;
- la figure 4 représente une vue en élévation latérale de l'écrou selon la première forme d'exécu-tion, en demi-coupe demi-vue selon la ligne II-II de la figure 3;
- la figure 5 représente une vue en élévation latérale éclatée de l'écrou selon la première forme d'exécution en demi-coupe demi-vue;
- la figure 6 représente une vue en élévation latérale par l'avant du ressort torique fermé;
- la figure 7 représente une vue en coupe de l'arbre et de l'écrou en position déverrouillée selon la première forme d'exécution et selon la ligne III-III de la figure 8;
- la figure 8 représente une vue en élévation latérale en demi-coupe demi-vue de l'ensemble arbre, écrou en position déverrouillée et en coupe de la douille de serrage selon la première forme d'exécution;
- la figure 9 représente une vue agrandie d'une zone interface: dent de segment avec profil à cannelures mâles de l'arbre, en position déverrouillée;
- la figure 10 représente une vue en coupe de l'arbre et de l'écrou en position déverrouillée selon la première forme d'exécution et selon la ligne IV-IV de la figure 8;
- la figure 11 représente une vue en élévation latérale par l'avant de l'arbre et de l'écrou en position verrouillée selon la première forme d'exécution;
- la figure 12 représente une vue en élévation latérale en demi-coupe demi-vue de l'ensemble arbre, écrou en position verrouillée selon la première forme d'exécution;
- la figure 13 représente une vue en coupe de l'arbre et de l'écrou en position verrouillée selon la première forme d'exécution et selon la ligne V-V de la figure 12;
- la figure 14 représente une vue agrandie d'une zone interface: dent de segment avec profil à cannelures mâles de l'arbre, en position verrouillée;
- la figure 15 représente une vue en coupe de l'arbre et de l'écrou en position verrouillée selon la première forme d'exécution et selon la ligne V-V de la figure 12, dans un cas de figure où le nombre de creux des cannelures mâles de l'arbre n'est pas un multiple entier du nombre de segments;
- les figures 16, 17 et 18 représentent différentes vues agrandies d'une de zones interfaces: dent de segment avec profil à cannelures mâles de l'arbre;
- la figure 19 représente une vue en élévation latérale par l'avant de l'arbre selon la figure 20;
- la figure 20 représente une vue en élévation latérale de l'arbre, en demi-coupe demi-vue selon la ligne VI-VI de la figure 19;
- la figure 21 représente une vue en élévation latérale par l'avant de l'écrou selon la seconde forme d'exécution;
- la figure 22 représente une vue en élévation latérale de l'écrou selon la seconde forme d'exécution, en demi-coupe demi-vue selon la ligne VII-VII de la figure 21;
- la figure 23 représente une vue en élévation latérale éclatée de l'écrou selon la seconde forme d'exécution en demi-coupe demi-vue;
- la figure 24 représente une vue en élévation latérale par l'avant du ressort torique fermé;
- la figure 25 représente une vue en coupe de l'arbre et de l'écrou en position déverrouillée selon la seconde forme d'exécution et selon la ligne VIII-VIII de la figure 26;
- la figure 26 représente une vue en élévation latérale en demi-coupe demi-vue de l'ensemble arbre, écrou en position déverrouillée et en coupe de la douille de serrage selon la seconde forme d'exécution;
- la figure 27 représente une vue agrandie d'une zone interface: dent de segment avec profil à cannelures femelles de l'arbre, en position déverrouillée;
- la figure 28 représente une vue en coupe de l'arbre et de l'écrou en position déverrouillée selon la seconde forme d'exécution et selon la ligne IX-IX de la figure 26;
- la figure 29 représente une vue en élévation latérale par l'avant de l'arbre et de l'écrou en position verrouillée selon la seconde forme d'exécution;
- la figure 30 représente une vue en élévation latérale en demi-coupe demi-vue de l'ensemble arbre, écrou en position verrouillée selon la seconde forme d'exécution;
- la figure 31 représente une vue en coupe de l'arbre et de l'écrou en position verrouillée selon la seconde forme d'exécution et selon la ligne X-X de la figure 30;
- la figure 32 représente une vue agrandie d'une zone interface: dent de segment avec profil à cannelures femelles de l'arbre, en position verrouillée;
- la figure 33 représente une vue en coupe de l'arbre et de l'écrou en position verrouillée selon la seconde forme d'exécution et selon la ligne X-X de la figure 30, dans un cas de figure où le nombre de creux des cannelures femelles de l'arbre n'est pas un multiple entier du nombre de segments;
- les figures 34, 35 et 36 représentent différentes vues agrandies de zones interfaces: dent de segment avec profil à cannelures femelles de l'arbre;
- la figure 37 représente, une vue en élévation latérale par l'avant de l'arbre et de l'écrou en position verrouillée selon la troisième forme d'exécution préférée;
- la figure 38 représente une vue en élévation latérale en demi-coupe demi-vue de l'ensemble arbre, écrou en position verrouillée selon la troisième forme d'exécution et selon la ligne XI-XI de la figure 37;
- la figure 39 représente, en troisième forme d'exécution, une vue en élévation latérale par l'avant de l'arbre et de l'écrou en position déverrouillée par la clé fermée représentée en section selon la ligne XIII-XIII de la figure 40;
- la figure 40 représente une vue en élévation latérale en demi-coupe demi-vue de l'ensemble arbre, écrou en position déverrouillée par la clé fermée selon la troisième forme d'exécution et selon la ligne XII-XII de la figure 39;
- la figure 41 représente une vue agrandie en élévation latérale de l'axe de rotation d'un segment frein formé par l'intersection du chanfrein de filetage interne à l'écrou avec le fond plat d'une rainure radiale fraisée dans l'écrou;
- la figure 42 représente une vue en élévation latérale par l'avant d'une possibilité d'arbre présentant des cannelures sur son filetage même;
- la figure 43 représente une vue en élévation latérale de la possibilité d'arbre présentant des cannelures sur son filetage même;
- la figure 44 représente une vue en coupe d'une possibilité d'arbre présentant des cannelures en bout selon la ligne XIV-XIV de la figure 45;
- la figure 45 représente une vue en élévation latérale en demi-coupe demi-vue de la possibilité d'arbre présentant des cannelures en bout;
- la figure 46 représente une vue en coupe d'une possibilité d'arbre perforé selon la ligne XV-XV de la figure 47;
- la figure 47 représente une vue en élévation latérale de la possibilité d'arbre perforé;

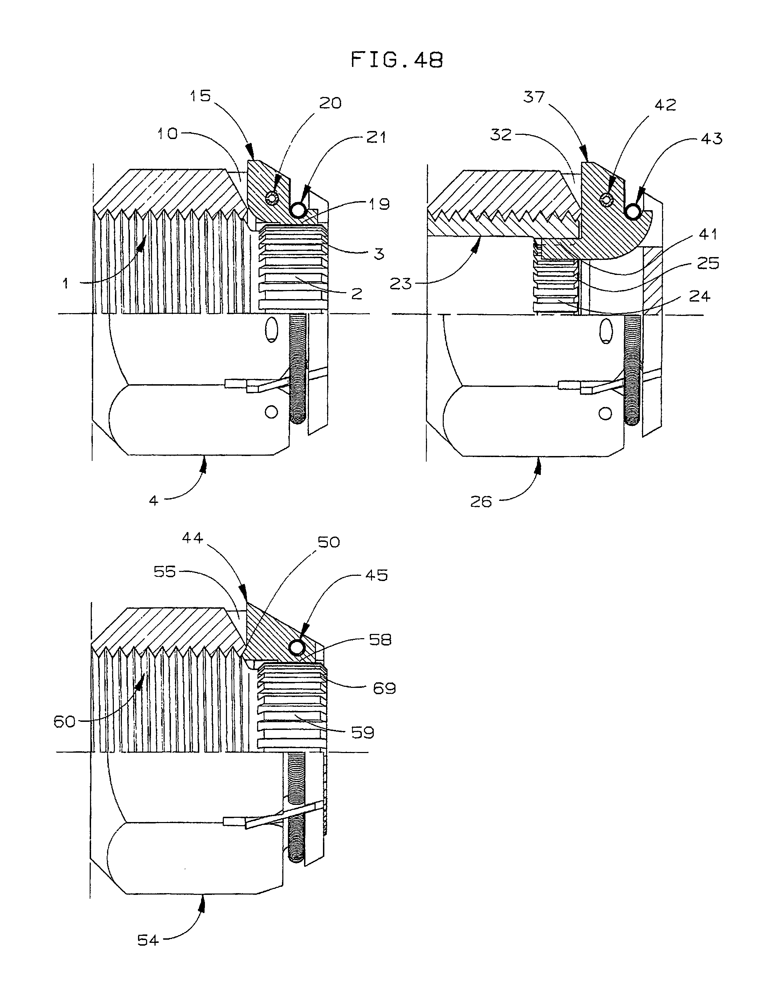

- la figure 48 représente une vue en élévation latérale en demi-coupe demi-vue de l'écrou en position verrouillée sur son arbre selon les deux trois formes d'exécution;

### Description de plusieurs modes d'exécution préférés de la présente invention

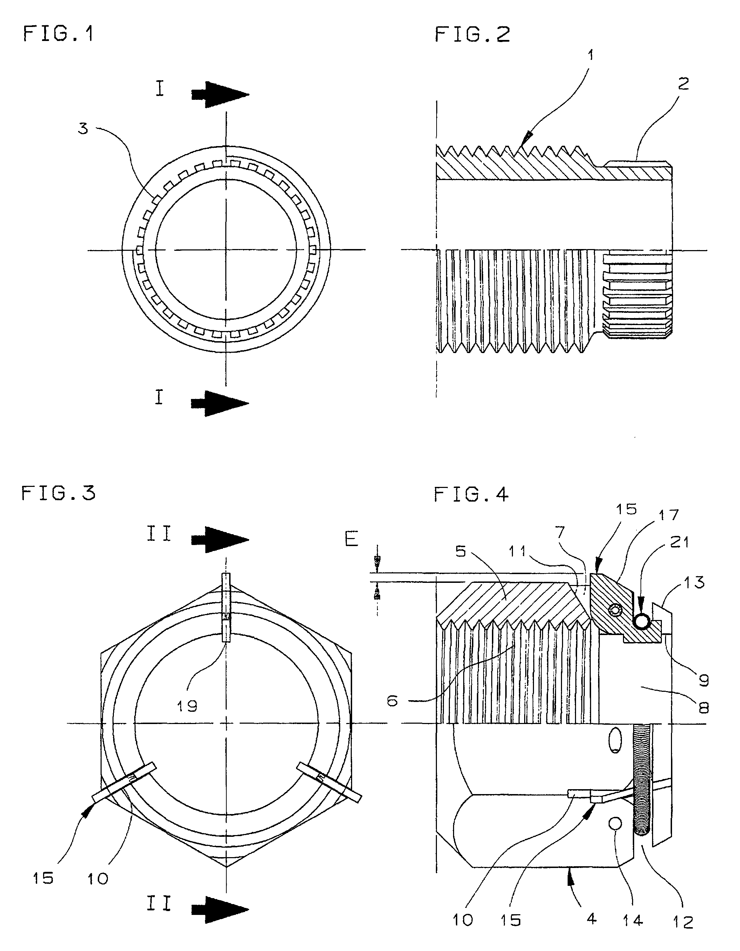

La figure 2 représente un arbre fileté 1 sur lequel on introduira un écrou à verrouillage positif et micrométrique automatique selon la présente invention. Il convient de noter que l'entrée de l'arbre 1 présente sur une excroissance 2 un profil à cannelures mâles 3 présentant des creux à flancs droits particulièrement bien représentés à la figure 1.

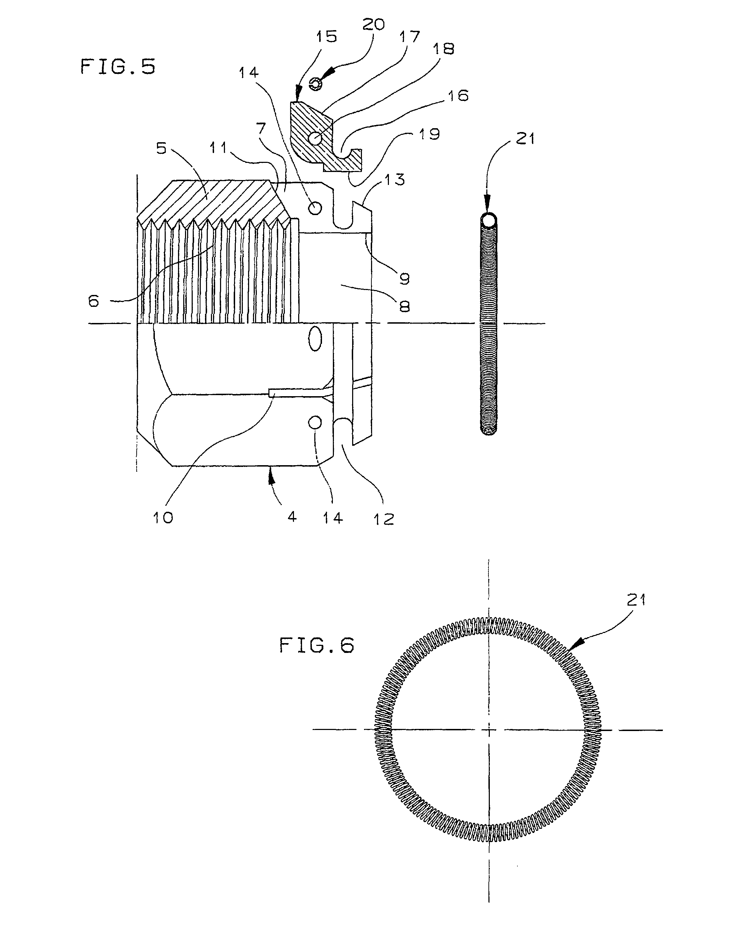

La figure 4 représente l'écrou à verrouillage positif et micrométrique automatique selon une première forme d'exécution de la présente invention. La moitié supérieure de la figure est représentée en coupe, la moitié inférieure est représentée en élévation latérale.

L'écrou à verrouillage positif et micrométrique automatique selon la présente invention est désigné par le repère général 4. Il comprend un écrou proprement dit, de profil extérieur hexagonal ou autre, possédant un corps massif 5 qui présente un alésage central avec un filetage interne 6 et à partir duquel s'étend vers l'arrière une jupe 7 qui délimite un chambrage 8. Le chambrage 8 est une cavité possédant une paroi interne cylindrique 9.

La jupe 7 comporte un certain nombre de rainures radiales 10, au minimum une, qui tel que représenté à la figure 3 sont angulairement équidistantes. La figure 4 montre particulièrement bien que ces rainures sont usinées dans la totalité de l'épaisseur de la jupe 7 et se terminent, à la jonction avec le corps 5 de l'écrou, par un dégagement 11.

La jupe 7 comporte en outre une rainure externe circulaire 12 usinée dans une partie tronconique externe 13 et est traversée de trous 14 perpendiculaires à chacune des rainures 10.

De manière avantageuse, on a disposé dans chacune des rainures 10, un segment frein 15 ainsi qu'il apparaît clairement à la figure 4.

Tel qu'on le remarque notamment à la figure 5, les segments freins 15, d'ailleurs tous identiques, sont chacun pourvus d'une ouverture 16 orientée vers l'extérieur, d'un trou 18 et d'une rampe 17 de même inclinaison que la partie tronconique 13 de l'écrou 4. De plus, comme représenté à la figure 3, leur partie interne est en forme de dent 19 de profil carré pour la circonstance.

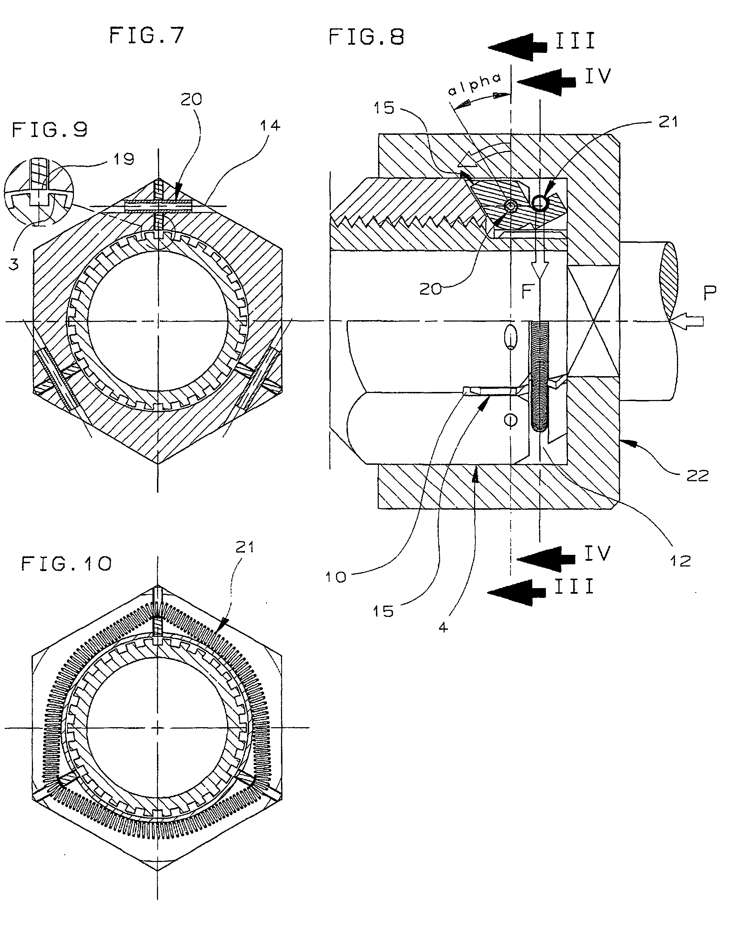

Les segments freins 15 seront, comme représentés à la figure 5, introduits dans chacune des rainures 10, de telle sorte que les trous 14 et 18 soient dans un alignement parfait permettant ainsi d'être traversés par des pivots 20 mieux visibles à la figure 7.

Les dimensions des diamètres des trous 14, des trous 18 et des pivots 20 sont déterminées de manière telle, que les pivots 20 soient fermement prisonniers des trous 14 et les segments 15 mobiles en rotation sur ces mêmes pivots 20; les goupilles élastiques, telles que représentées, réunissent parfaitement ces exigences et seront donc préférablement utilisées.

Sur l'assemblage ainsi constitué peut alors être introduit un anneau élastique qui, dans la circonstance est un ressort torique fermé 21 représenté à la figure 6. Ce ressort torique 21 est disposé dans la rainure externe circulaire 12 et épouse au passage de chacune des rainures 10 l'ouverture 16 de chacun des segments 15.

Dès lors, comme représenté à la figure 8, il en résulte que les segments freins 15 peuvent alors, sous l'effet d'une pression axiale exercée en chacun de leurs sommets, et indépendamment l'un de l'autre, pivoter indépendamment l'un de l'autre, d'un angle "alpha" autour de chacun de leur propre pivot 20 moyennant l'opposition d'une certaine contrainte radiale "F" exercée sur chacun d'eux par le ressort torique fermé 21 qui, constamment, tend à les rappeler vers leur position initiale telle que représentée à la figure 4.

Il y lieu de souligner également, comme représenté à la figure 4, que chacun des segments freins 15 dépasse légèrement du profil extérieur de l'écrou d'une même valeur "E" et, que chacune de leur rampe 17 est en parfait alignement avec la rampe de même inclinaison de la partie tronconique 13 de l'écrou 4.

Il en résulte alors à la figure 8, que le simple fait d'engager un outil 22, de profil intérieur hexagonal ou autre, sur l'écrou ainsi constitué entraîne un accrochage obligatoire avec les segments freins 15 dépassant d'une valeur "E" du profil extérieur hexagonal ou autre de l'écrou 4 les faisant alors basculer d'un angle "alpha" autour de chacun de leur propre pivot 20, avec pour conséquence le dégagement complet de la dent 19 du profil à cannelures mâles 3 bien visible à la figure 9; on parle alors de système déverrouillé pouvant se mouvoir librement en rotation sur l'arbre. On peut remarquer à la figure 10, que dans la circonstance, le ressort 21 prend une forme polygonale convexe.

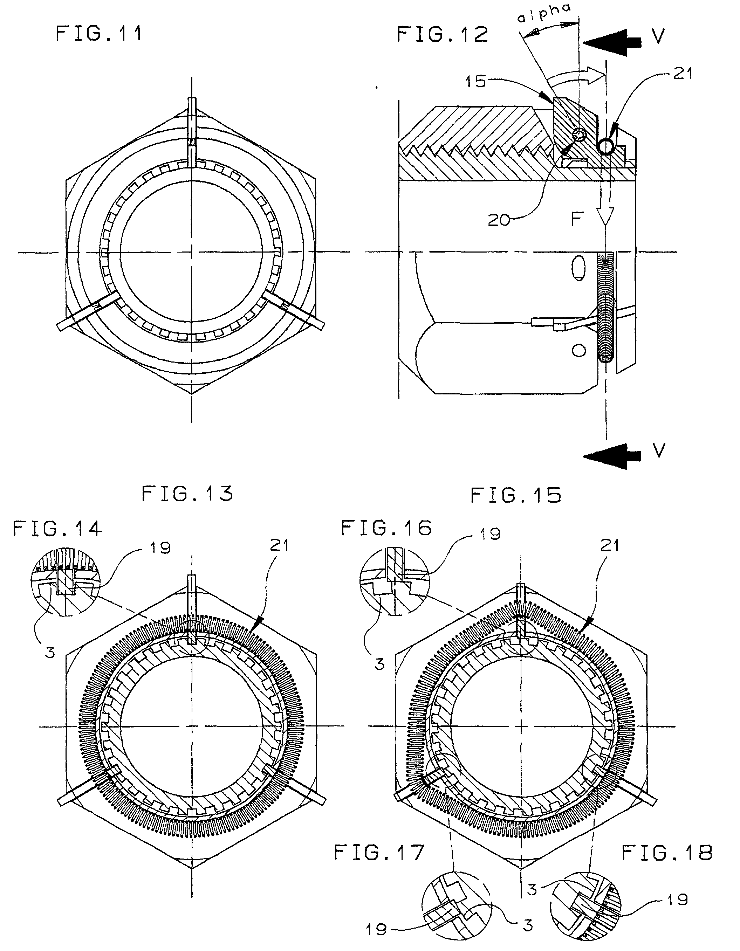

Par opposition, tel que représenté à la figure 12, le simple fait de retirer la douille 22 (non-représentée) du système, entraîne grâce à l'action conjuguée du ressort torique fermé 21 le basculement en sens inverse des segments freins 15 autour de chacun de leur propre pivot 20, avec pour conséquence l'engrènement parfait de la dent 19 avec l'un des creux correspondant des cannelures mâles 3, bien visible à la figure 14; on parle alors de système à verrouillage positif automatique ne pouvant plus se mouvoir librement en rotation sur l'arbre. On peut remarquer à la figure 13, que dans la circonstance, le ressort 21 reprend sa forme circulaire initiale.

Il y a lieu de souligner que, lorsque le nombre de creux des cannelures 3 de l'arbre 1 est un multiple entier du nombre de segments freins 15, tous les segments freins 15 de l'écrou 4 se trouvent en position verrouillée et le type de verrouillage est appelé "simple".

Si au contraire, ce n'est pas le cas, et que le nombre de creux des cannelures 3 de l'arbre 1 n'est pas un multiple entier du nombre de segments freins 15, au moins un segment frein se trouve en position verrouillée et le type de verrouillage est appelé "différentiel", qui aura pour effet, d'augmenter considérablement la précision angulaire de verrouillage. On peut alors remarquer à la figure 15, que dans la circonstance, le ressort 21 reprend une forme polygonale convexe mais dont un des sommets du polygone est tronqué, cela relève du fait que les dents représentées aux figures 16 et 17, par opposition avec la dent représentée à la figure 18, ne se trouve pas en face d'un creux correspondant des cannelures mâles 3; on parle alors de système à verrouillage positif et micrométrique automatique ne pouvant plus se mouvoir librement en rotation sur l'arbre.

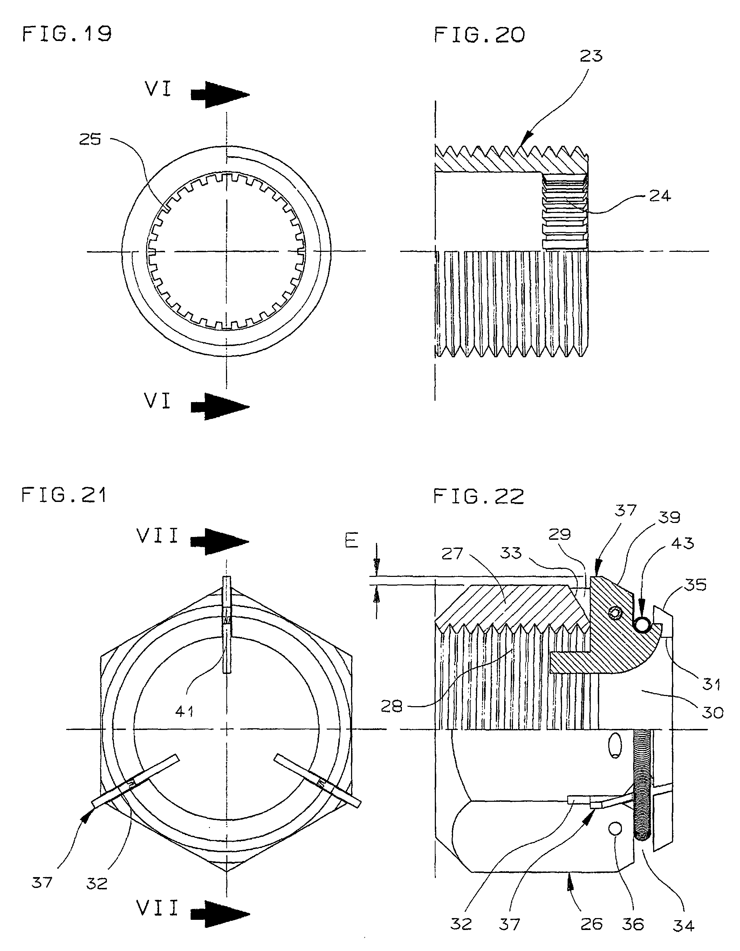

Selon une seconde forme d'exécution, la figure 20 représente un arbre fileté 23 sur lequel on introduira un écrou à verrouillage positif et micrométrique automatique selon une seconde forme préférée de la présente invention. Il convient de noter qu'en sa partie interne, l'arbre 23 présente une zone cannelée 24 présentant un profil à cannelures femelles 25 présentant des creux à flancs droits particulièrement bien représentés à la figure 19.

La figure 22 représente l'écrou à verrouillage positif et micrométrique automatique selon une seconde forme d'exécution préférée de la présente invention. La moitié supérieure de la figure est représentée en coupe, la moitié inférieure est représentée en élévation latérale.

L'écrou à verrouillage positif et micrométrique automatique selon la présente invention est désigné par le repère général 26. Il comprend un écrou proprement dit, de profil extérieur hexagonal ou autre, possédant un corps massif 27 qui présente un alésage central avec un filetage interne 28 et à partir duquel s'étend vers l'arrière une jupe 29 qui délimite un chambrage 30. Le chambrage 30 est une cavité possédant une paroi interne cylindrique 31.

La jupe 29 comporte un certain nombre de rainures radiales 32, au minimum une, qui tel que représenté à la figure 21 sont angulairement équidistantes. La figure 22 montre particulièrement bien que ces rainures sont usinées dans la totalité de l'épaisseur de la jupe 29 et se terminent, à la jonction avec le corps 27 de l'écrou, par un dégagement 33.

La jupe 29 comporte en outre une rainure externe circulaire 34 usinée dans une partie tronconique externe 35 et est traversée de trous 36 perpendiculaires à chacune des rainures 32.

De manière avantageuse, on a disposé dans chacune des rainures 32, un segment frein 37 ainsi qu'il apparaît clairement à la figure 22.

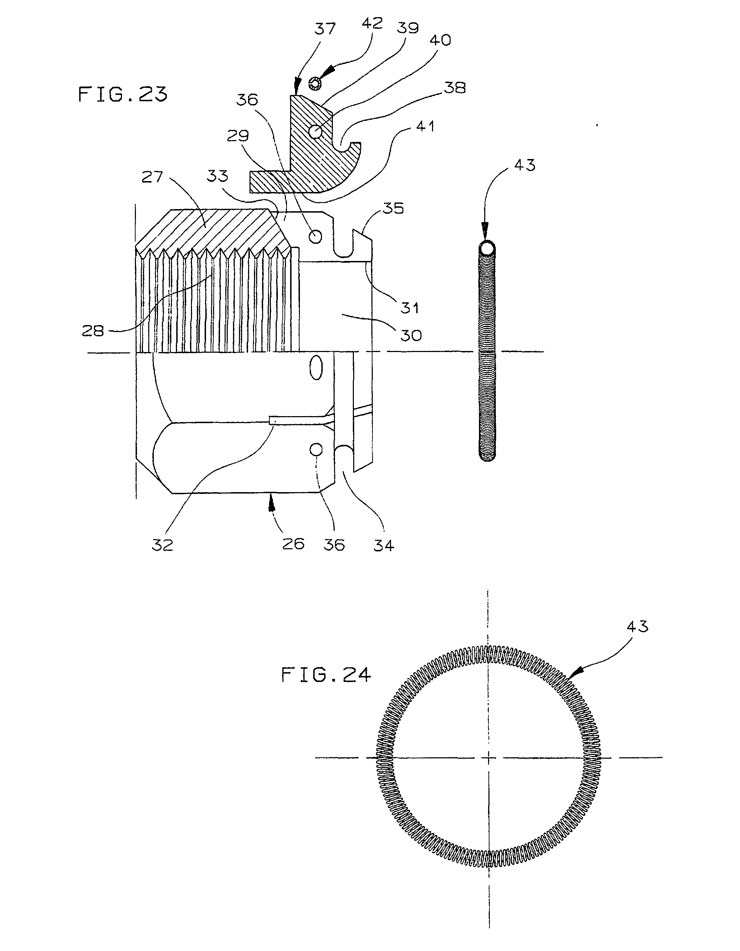

Tel qu'on le remarque notamment à la figure 23, les segments freins 37, d'ailleurs tous identiques, sont chacun pourvus d'une ouverture 38 orientée vers l'extérieur, d'un trou 40 et d'une rampe 39 de même inclinaison que la partie tronconique 35 de l'écrou 26. De plus, comme représenté à la figure 21, leur partie interne est en forme de dent 41 de profil carré pour la circonstance.

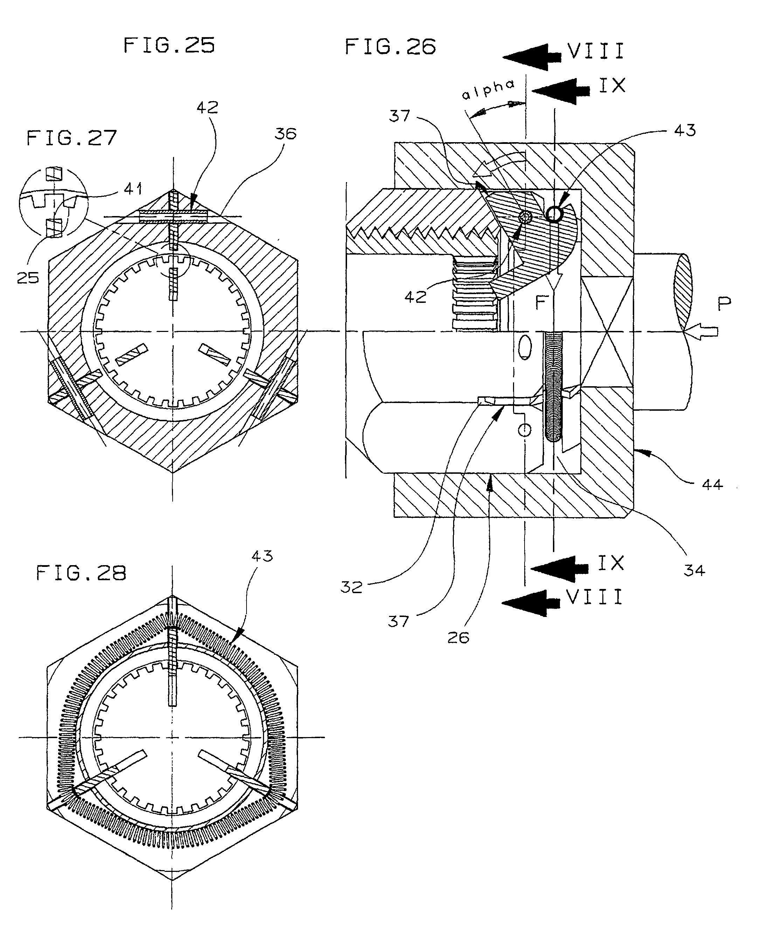

Les segments freins 37 seront, comme représentés à la figure 23, introduits dans chacune des rainures 32, de telle sorte que les trous 36 et 40 soient dans un alignement parfait permettant ainsi d'être traversés par des pivots 42 mieux visibles à la figure 25.

Les dimensions des diamètres des trous 36, des trous 40 et des pivots 42 sont déterminées de manière telle, que les pivots 42 soient fermement prisonniers des trous 36 et les segments 37 mobiles en rotation sur ces mêmes pivots 42; les goupilles élastiques, telles que représentées, réunissent parfaitement ces exigences et seront donc préférablement utilisées.

Sur l'assemblage ainsi constitué peut alors être introduit un anneau élastique qui, dans la circonstance est un ressort torique fermé 43 représenté à la figure 24. Ce ressort torique 43 est disposé dans la rainure externe circulaire 34 et épouse au passage de chacune des rainures 32 l'ouverture 38 de chacun des segments 37.

Dès lors, comme représenté à la figure 26, il en résulte que les segments freins 37 peuvent alors, sous l'effet d'une pression axiale exercée en chacun de leurs sommets, pivoter indépendamment l'un de l'autre, d'un angle "alpha" autour de chacun de leur propre pivot 42 moyennant l'opposition d'une certaine contrainte radiale "F" exercée sur chacun d'eux par le ressort torique fermé 43 qui, constamment, tend à les rappeler vers leur position initiale telle que représentée à la figure 22.

Il y lieu de souligner également, comme représenté à la figure 22, que chacun des segments freins 37 dépasse légèrement du profil extérieur de l'écrou d'une même valeur "E" et, que chacune de leur rampe 39 est en parfait alignement avec la rampe de même inclinaison de la partie tronconique 35 de l'écrou 26.

Il en résulte alors à la figure 26, que le simple fait d'engager un outil 44, de profil intérieur hexagonal ou autre, sur l'écrou ainsi constitué entraîne un accrochage obligatoire avec les segments freins 37 dépassant d'une valeur "E" du profil extérieur hexagonal ou autre de l'écrou 26 les faisant alors basculer d'un angle "alpha" autour de chacun de leur propre pivot 42, avec pour conséquence le dégagement complet de la dent 41 du profil à cannelures femelles 25 bien visible à la figure 27; on parle alors de système déverrouillé pouvant se mouvoir librement en rotation sur l'arbre. On peut remarquer à la figure 28, que dans la circonstance, le ressort 43 prend une forme polygonale convexe.

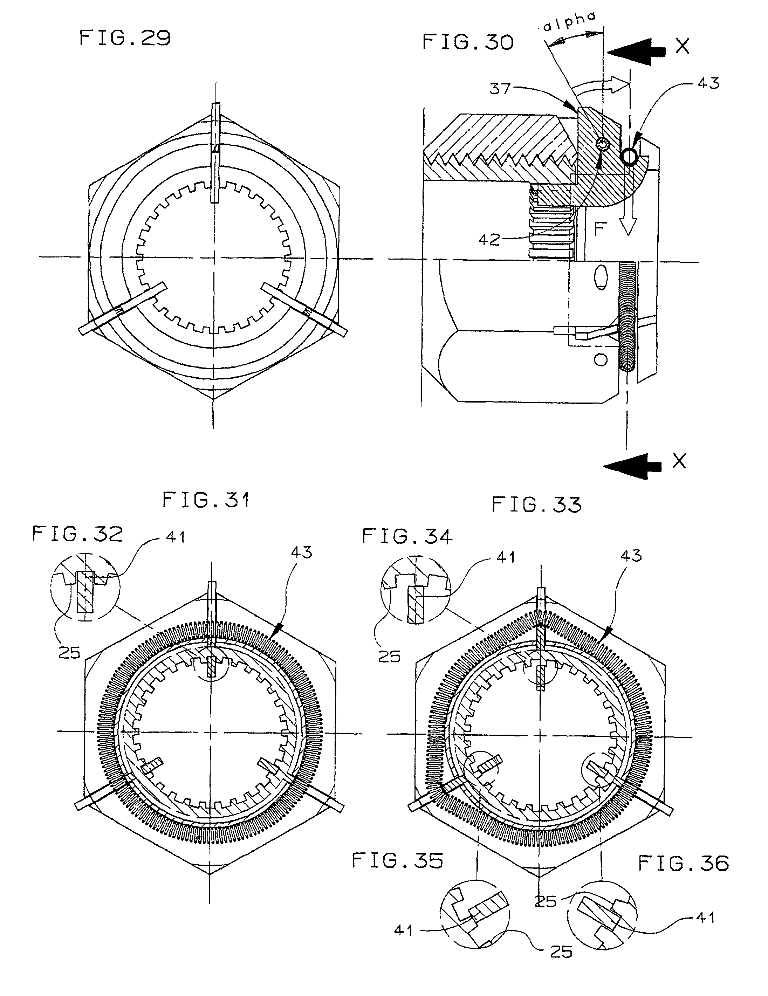

Par opposition, tel que représenté à la figure 30, le simple fait de retirer l'outil 44 (non-représentée) du système, entraîne grâce à l'action conjuguée du ressort torique fermé 43 le basculement en sens inverse des segments freins 37 autour de chacun de leur propre pivot 42, avec pour conséquence l'engrènement parfait de la dent 41 avec l'un des creux correspondant des cannelures femelles 25, bien visible à la figure 32; on parle alors de système à verrouillage positif automatique ne pouvant plus se mouvoir librement en rotation sur l'arbre.
On peut remarquer à la figure 31, que dans la circonstance, le ressort 43 reprend sa forme circulaire initiale.

Tout comme souligné dans la première forme d'exécution, il y a lieu également de souligner dans cette seconde forme d'exécution préférée de l'invention que, lorsque le nombre de creux des cannelures 59 de l'arbre 23 est un multiple entier du nombre de segments freins 37, tous les segments freins se trouvent en position verrouillée et le type de verrouillage est appelé "simple".

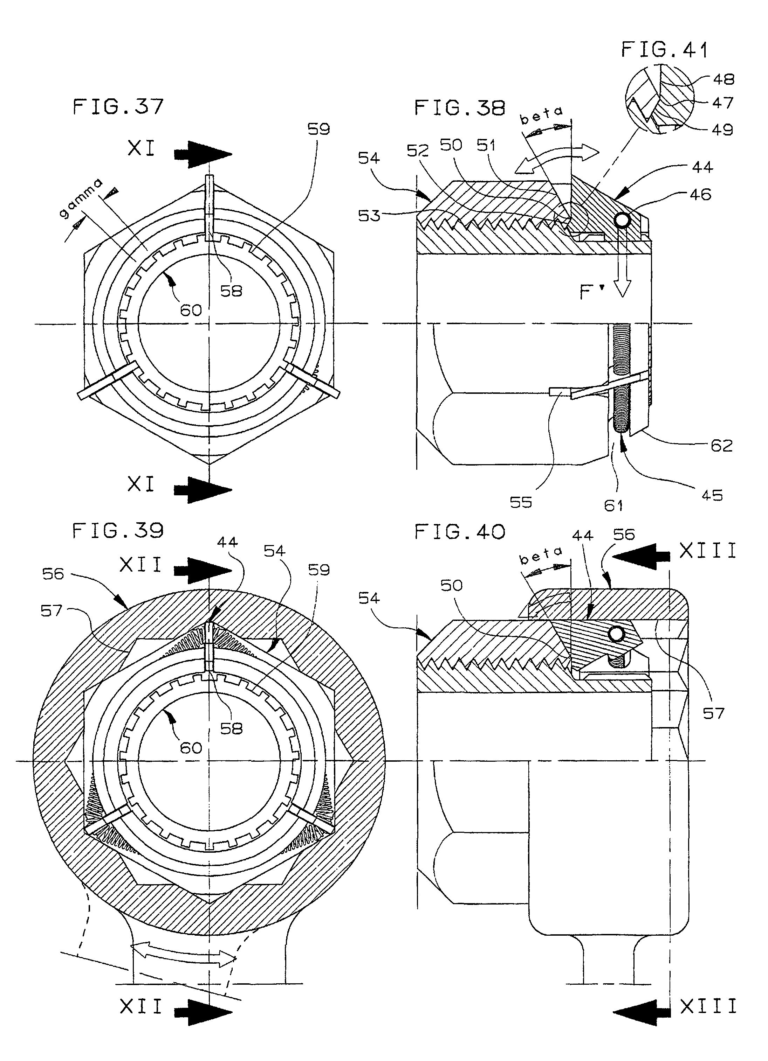

Si au contraire, ce n'est pas le cas et que, le nombre de creux des cannelures 59 de l'arbre 23 n'est pas un multiple entier du nombre de segments freins 37, au moins un segment frein se trouve en position verrouillée et le type de verrouillage est appelé "différentiel", qui aura pour effet, d'augmenter considérablement la précision angulaire de verrouillage. On peut alors remarquer à la figure 33, que dans la circonstance, le ressort 43 reprend une forme polygonale convexe mais dont un des sommets du polygone est tronqué, cela relève du fait que les dents représentées aux figures 34 et 35, par opposition avec la dent représentée à la figure 36, ne se trouve pas en face d'un creux correspondant des cannelures femelles 25; on parle alors de système à verrouillage positif et micrométrique automatique ne pouvant plus se mouvoir librement en rotation sur l'arbre.

Une troisième forme d'exécution préférée de la présente invention permettra, sur base des principes de fonctionnement énoncés dans la description des deux premières formes d'exécution préférées de la présente invention, d'offrir les trois avantages complémentaires suivants: Le premier qui consistera en une suppression pure et simple des pivots 20 et 42 de segments freins 15 et 37, dans les cas d'applications où les contraintes mécaniques appliquées sur les segments freins 15 et 37 le permettront, le second qui fournira la possibilité de manipuler latéralement l'écrou avec l'aide d'une clé fermée lorsqu'un accès axial est impossible et, le troisième qui procurera l'assurance d'avoir un écrou toujours verrouillé, quelle que soit sa position angulaire sur l'arbre.

On peut déjà remarquer à la figure 38 sur la section d'un des segments freins 44, que ceux-ci sont tous, au travers d'une ouverture 46, traversés par un anneau circulaire élastique ou encore ressort torique fermé 45. De plus, les segments freins 44 présentent également en leur partie avant, une arête concave 47 constituée par la jonction des parties planes 48 et 49 de leur faces avant. Cette arête concave 47 est destinée à recevoir une arête convexe 50 constituée par la jonction de la partie plane 51 et de la partie conique 52 de l'écrou; la partie conique 52 étant matérialisée par un chanfrein circulaire interne réalisé à la sortie du filetage 53 de l'écrou 54.

Le mariage des arêtes 47 et 50, permet alors aux segments freins 44 de se mouvoir en rotation, indépendamment l'un de l'autre dans chacune de leur rainure 55 radiales à l'écrou, d'un angle "bêta" autour des arêtes convexes 50, constituant alors les axes propres de rotation des segments freins 44.

On s'aperçoit alors à la figure 40 que, tout comme pour les deux premières formes d'exécution préférées de la présente invention, le simple fait d'engager une clé fermée 56 sur l'écrou 54 provoque inévitablement l'accrochage des segments freins 44 avec le profil intérieur 57 de la clé entraînant par le fait même le basculement d'un angle "bêta" de tous les segments freins 44 autour de chacune de leur propre arête convexe 50, cela ayant pour effet, comme représenté à la figure 39 de dégager chacune des dents 58 des segments freins 44 des cannelures 59 de l'arbre 60 permettant ainsi de serrer ou de desserrer l'écrou 54 par une manipulation radiale.

En corollaire et, comme représenté à la figure 38, le simple fait de retirer la clé fermée 56 de l'écrou 54 libère les segments 44 qui, soumis à la force "F"' de l'anneau élastique ou ressort torique fermé 45, basculent en sens inverse autour de chacune de leur propre arête convexe 50 d'un angle "bêta" en engageant au moins une de leurs dents 58 dans l'un des creux 60 des cannelures 59, comme représenté à la figure 37, verrouillant ainsi l'écrou, de manière positive et micrométrique automatique. De plus, l'angle entre deux dents "gamma" sera dimensionné de manière telle que, dans toutes les positions angulaires de l'écrou sur l'arbre, au moins un segment frein se trouve en position verrouillée de manière à toujours assurer un parfait verrouillage de l'écrou, quelle que soit donc sa position sur l'arbre.

On notera que dans les trois modes d'exécutions préférées de la présente invention, les axes de rotation (20)(42)(50) sont réalisées soit par un pivot, par une goupille élastique (20)(42), soit encore par une arête (50).

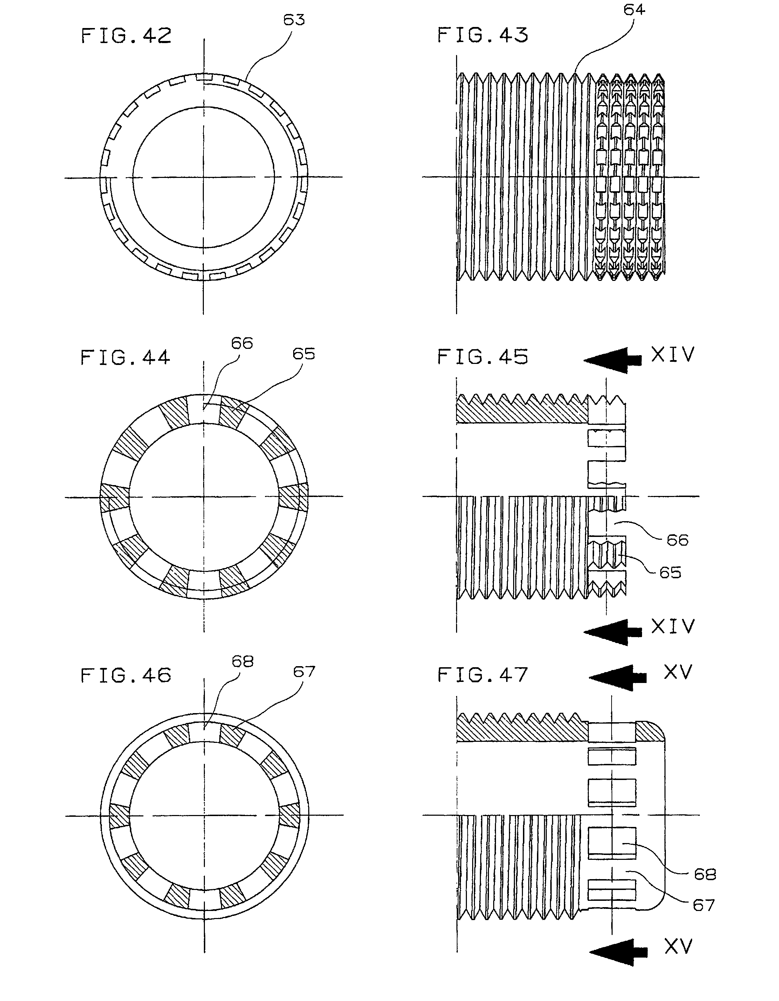

Il sera également noté que, comme signalé dans la description de la première forme d'exécution préférée de la présente invention, les cannelures mâles 3 étaient situées sur une excroissance 2 l'arbre 1, tel que représenté par les figures 1 et 2, cette possibilité n'est pas l'unique et il est tout à fait envisageable de concevoir, sans que cela ne soit limitatif: des cannelures 63 réalisées directement sur le filetage 64 de l'arbre comme représenté par les figures 42 et 43, des cannelures 65 en bout d'arbre et obtenues par des fraisages radiaux 66 comme représenté par les figures 44 et 45, ou encore des cannelures 67 à l'entrée de l'arbre et obtenues par des fenêtres 68 découpées dans l'épaisseur de l'arbre comme représenté par les figures 46 et 47.

## Revendications

1. Ecrou (4)(26)(54) à verrouillage positif et micrométrique automatique destiné à être vissé sur un arbre (1)(23)(60) présentant une partie cannelée externe (2)(59) ou interne (24), ledit écrou comprenant un ou plusieurs segments freins (15)(37)(44) comportant chacun au moins une dent (19)(41)(58), qui sont destinés à immobiliser l'écrou (4)(26)(54) en rotation sur l'arbre (1)(23)(60), ces segments freins (15)(37)(44), articulés sur des axes de rotation (20)(42)(50) perpendiculaires à des rainures radiales (10)(32)(55) usinées dans l'écrou (4)(26)(54), étant mobiles entre une première position de verrouillage et une seconde position de déverrouillage, les segments freins (15)(37)(44) dans lesdites rainures de l'écrou étant, constamment et indépendamment, radialement sollicités par un seul anneau circulaire élastique ou encore un ressort torique fermé (21)(43)(45).

2. Ecrou selon la revendication 1, **caractérisé en ce que** lorsque le nombre de creux des cannelures (3)(59)(25) de l'arbre (1)(23)(60) est un multiple entier du nombre de segments freins (15)(37)(44), tous les segments freins de l'écrou (4)(26)(54) se trouvent en position verrouillée.

3. Ecrou selon la revendication 1, **caractérisé en ce que** lorsque le nombre de creux des cannelures (3)(59)(25) de l'arbre (1)(23)(60) n'est pas un multiple entier du nombre de segments freins (15)(37)(44), au moins un segment frein de l'écrou (4)(26)(54) se trouve en position verrouillée afin d'augmenter considérablement la précision angulaire de verrouillage.

4. Ecrou (4)(26)(54) selon la revendication 1 **caractérisé en ce que** les segments freins (15)(37)(44) sont chacun pourvus d'une ouverture (16)(38)(46) dans laquelle prend place un anneau circulaire élastique ou ressort torique fermé (21)(43)(45) qui permet de solliciter radialement en permanence les différents segments freins (15)(37)(44) en pressant fermement leur dent (19)(41)(58) dans l'un des creux correspondants des cannelures (3)(25)(59) de l'arbre (1)(23)(60).

5. Ecrou (4)(26)(54) selon la revendication 4 précédentes **caractérisé en ce que** l'anneau circulaire élastique ou ressort torique fermé (21)(43)(45) est précontraint dans une rainure circulaire (12)(34)(61) située dans une zone tronconique (13)(35)(62) de la partie arrière et extérieure de l'écrou (4)(26)(54) et épouse simultanément, au passage de chacune des rainures radiales (10)(32)(55) pratiquées dans l'écrou (4)(26)(54), l'ouverture (16)(38)(46) usinée sur chacun des segments freins (15)(37)(44).

6. Ecrou selon l'une quelconque des revendications précédentes **caractérisé en ce que** les pattes des segments freins (15)(37)(44), dépassent légèrement du profil extérieur hexagonal ou autre de l'écrou (4)(26)(54).

7. Ecrou selon l'une quelconque des revendications précédentes **caractérisé en ce que** le profil extérieur de l'écrou (4)(26)(54) est de similitude parfaite avec le profil intérieur, obligatoirement fermé, de l'outil d'installation (22)(44)(56).

8. Ecrou selon l'une quelconque des revendications précédentes **caractérisé en ce qu'**il se verrouille d'autant plus fort que la vitesse augmente, étant donné que les segments freins (15)(37)(44), par une adéquate répartition de leur masse, sont en déséquilibre par rapport à leur axe de rotation (20)(42)(50), de manière à créer, dans le cas d'applications tournantes, par le phénomène de la force centrifuge, une force radiale, agissant sur chaque segment frein (15)(37)(44) et, qui sera d'autant plus importante que la vitesse de rotation sera grande.

9. Ecrou selon l'une quelconque des revendications précédentes **caractérisé dans le fait que,** dans toutes les positions angulaires de l'écrou (4)(26)(54) sur l'arbre (1)(23)(60), au moins un segment frein (15)(37)(44) se trouve en position verrouillée de manière à assurer un parfait verrouillage de l'écrou, quelle que soit sa position sur l'arbre.

10. Ecrou selon l'une quelconque des revendications précédentes **caractérisé dans le fait que**, les axes de rotation (20)(42)(50) sont réalisées soit par un pivot, par une goupille élastique (20)(42), soit encore par une arête (50).

## Patentansprüche

1. Selbstsichernde Mutter (4)(26)(54) mit mikrometrischer automatischer Sperrung, dazu bestimmt, auf eine außen (2)(59) oder innen (24) genutete Welle (1)(23)(60) geschraubt zu werden; diese Mutter weist ein oder mehrere Sicherungselemente (15)(37)(44) auf, die alle mindestens einen Zahn (19)(41)(58) haben und die dazu bestimmt sind, die Mutter (4)(26)(54) bei Drehung auf der Welle (1)(23)(60) zu sichern, wobei diese Sicherungselemente (15)(37)(44) um Drehachsen (20)(42)(50) beweglich sind, die senkrecht zu radial in die Mutter (4)(26)(54) eingearbeiteten Nuten (10)(32)(55) stehen, und zwischen einer ersten Sperrposition und einer zweiten Löseposition beweglich sind; die Sicherungselemente (15)(37)(44) werden dabei in diesen Nuten der Mutter ständig und voneinander unabhängig durch einen einzigen kreisförmigen elastischen Ring oder auch eine geschlossene Rundfeder (21)(43)(45) in radialer Richtung belastet.

2. Mutter nach Anspruch 1, **dadurch gekennzeichnet, dass** alle Sicherungselemente der Mutter (4)(26)(54) sich in Sperrposition befinden, wenn die Zahl der Nutvertiefungen (3)(59)(25) der Welle (1)(23)(60) ein ganzzahliges Vielfaches der Zahl der Sicherungselemente (15)(37)(44) ist.

3. Mutter nach Anspruch 1, **dadurch gekennzeichnet, dass** wenigstens ein Sicherungselement der Mutter (4)(26)(54) sich in Sperrposition befindet, wenn die Zahl der Nutvertiefungen (3)(59)(25) der Welle (1)(23)(60) nicht ein ganzzahliges Vielfaches der Zahl der Sicherungselemente (15)(37)(44) ist, um die Winkelgenauigkeit der Sicherung beträchtlich zu erhöhen.

4. Mutter (4)(26)(54) nach Anspruch 1, **dadurch gekennzeichnet, dass** jedes Sicherungselement(15)(37)(44) mit einer Öffnung (16)(38)(46) versehen ist, in die ein kreisförmiger, elastischer Ring oder eine geschlossene Rundfeder (21)(43)(45) eingelegt ist, die ständig eine radiale Kraft auf die einzelnen Sicherungselemente (15)(37)(44) ausübt, indem sie deren Zahn (19)(41)(58) fest in eine der entsprechenden Nutvertiefungen (3)(59)(25) der Welle (1)(23)(60) drückt.

5. Mutter (4)(26)(54) nach Anspruch 4, **dadurch gekennzeichnet, dass** der kreisförmige, elastische Ring oder die geschlossene Rundfeder (21) (43) (45) in einer kreisförmigen Nut (12)(34)(61) in einem kegelstumpfförmigen Bereich (13)(35)(62) des hinteren, äußeren Teils der Mutter (4)(26)(54) vorgespannt ist und gleichzeitig an jeder der radialen Nuten (10) (32) (55) der Mutter (4) (26) (54) in der Öffnung (16)(38)(46) liegt, die in jedes Sicherungselement(15)(37)(44) eingebracht ist.

6. Mutter nach einem der vorstehenden Ansprüche, **dadurch gekennzeichnet, dass** die Spitzen der Sicherungselemente (15)(37)(44) leicht aus dem äußeren Sechskantprofil oder anderem Profil der Mutter (4)(26)(54) herausragen.

7. Mutter nach einem der vorstehenden Ansprüche, **dadurch gekennzeichnet, dass** das äußere Profil der Mutter (4)(26)(54) exakt dem zwingender Weise geschlossenen inneren Profil des Montagewerkzeugs (22)(44)(56) entspricht.

8. Mutter nach einem der vorstehenden Ansprüche, **dadurch gekennzeichnet, dass** sie mit zunehmender Drehzahl immer stärker sperrt, da die Sicherungselemente (15)(37)(44) durch eine entsprechende Verteilung ihrer Masse in Bezug auf ihre Drehachse (20)(42)(50) eine ungleiche Massenverteilung aufweisen, so dass bei Drehanwendungen durch das Phänomen der Zentrifugalkraft eine radiale Kraft erzeugt wird, die auf jedes Sicherungselement (15)(37)(44) wirkt und die mit steigender Drehzahl zunimmt.

9. Mutter nach einem der vorstehenden Ansprüche, **dadurch gekennzeichnet, dass** sich bei allen Winkelpositionen der Mutter (4)(26)(54) auf der Welle (1)(23)(60) mindestens ein Sicherungselement (15)(37)(44) in Sperrposition befindet, so dass bei jeder beliebigen Position der Mutter auf der Welle immer eine optimale Sperrung der Mutter gewährleistet ist.

10. Mutter nach einem der vorstehenden Ansprüche, **dadurch gekennzeichnet, dass** die Drehachsen (20)(42)(50) entweder durch einen Zapfen, einen Spannstift (20)(42) oder auch eine Kante (50) gebildet werden.

## Claims

1. Nut (4)(26)(54) with positive and micrometric locking intended to be screwed on a shaft (1)(23)(60) comprising an external (2)(59) or internal (24) serrated part, said nut comprising one or more locking segments (15)(37)(44) having each at least one tooth (19)(41)(58) intended to fix in rotation the nut (4)(26)(54) on the shaft (1)(23)(60), these locking segments (15)(37)(44), articulated on axles of rotation (20)(42)(50) perpendicular to radial slots (10)(32)(55) machined in the nut (4)(26)(54), being movable between a first locking position and a second unlocked position, the locking segments (15)(37)(44) in said slots of the nut being constantly and independently solicited radially by one single circular ring or even a closed torical spring (21)(43)(45).

2. Nut according to claim 1 **characterized in that** when the number of grooves of the serrations (3)(59)(25) of the shaft (1)(23)(60) is an integer multiple of the number of locking segments (15)(37)(44), all the locking segments of the nut (4)(26)(54) are in a locked position.

3. Nut according to claim 1 **characterized in that** when the number of grooves of the serrations (3)(59)(25) of the shaft (1)(23)(60) is not an integer multiple of the number of locking segments (15)(37)(44), at least one locking segment is in a locked position in order to increase considerably the angular precision of locking.

4. Nut (4)(26)(54) according to claim 1, **characterized in that** the locking segments (15)(37)(44) are provided with an aperture (16)(38)(46) in which is located a circular resilient ring or closed torical spring (21)(43)(45), which allows to act radially and permanently upon the different segments (15)(37)(44) by pressing firmly their tooth (19)(41)(59) in one of the facing grooves of the serrations (3)(25)(59) of the shaft (1)(23)(60).

5. Nut (4)(26)(54) according to claim 4 **characterized in that** the circular resilient ring or closed torical spring (21)(43)(45) is prestressed in a circular groove (12)(34)(61) located in a truncated conical area (13)(35)(62) of the rear and external part of the nut (4)(26)(54) and fits exactly, through each radial slot machined in the nut (4)(26)(54), the aperture (16)(38)(46) machine on each locking segment (15)(37)(44).

6. Nut according to any one of previous claims **characterized in that** the tangs of the locking segments (15)(37)(44) are slightly sticking out of the hexagonal or other external shape of the nut (4)(26)(54).

7. Nut according to any one of previous claims **characterized in that** the external shape of the nut (4)(26)(54) is of perfect fit with the internal shape, obligatory closed, of the installation tool (22)(44)(56).

8. Nut according to any one of previous claims **characterized in that** it locks itself more strongly than the speed increases, due to the fact that the locking segments (15)(37)(44) are, by an adaquate weight repartition, unbalanced with regard to their rotation axles (20)(42)(50), in order to create, in rotative applications, by the phenomena of centrifugal force, a radial force acting on each locking segment (15)(37)(44) which will be the more important as the speed will be high.

9. Nut according to any one of previous claims **characterized in** the fact that, in all the angular position of the nut (4)(26)(54) on the shaft (1)(23)(60), at least one locking segment (15)(37)(44) is in a locked position in order to ensure a perfect locking of the nut, whatever its position on the shaft may be.

10. Nut according to any one of previous claims **characterized in** the fact that, the rotation axles (20)(42)(50) are realized either by a pivot, by a resilient pin (20)(42), or by a firm solid angle (50).
